# EUROPEAN PATENT APPLICATION

(11) **EP 1 555 339 A2**
(43) Date of publication of application: **20.07.2005**
(21) Application number: 04254976.6
(22) Date of filing: 19.08.2004
(51) Int. Cl.: D06F 39/04, D06F 35/00

(54) **Washing machine and control method thereof**

(30) Priority: 06.01.2004 KR 2004000680
(71) Applicant: Samsung Electronics Co., Ltd., Suwon-si, Gyeonggi-do (KR)
(72) Inventor: Kim, Hyun Sook, Youngtong-gu Suwon-si, Gyeonggi-do (KR); Park, Seon Woo, Youngtong-gu Suwon-si, Gyeonggi-do (KR); Kim, Hyung Gyoon, Suwon-si, Gyeonggi-do (KR); Pyo, Sang Yeon, Youngtong-gu Suwon-si, Gyeonggi-do (KR); Yang, Hye Soon, Youngtong-gu Suwon-si, Gyeonggi-do (KR); Park, Jae Ryong, Youngtong-gu Suwon-shi, Gyeonggi-do (KR); Oak, Seong Min, Masan-city Gyeongsangnam-do (KR); Choi, Seung Ju, Youngtong-gu Suwon-si, Gyeonggi-do (KR); Yang, Byoung Yull, Danwon-gu Ansan-si, Gyeonggi-do (KR)
(74) Representative: Davies, Robert Ean

(57) **Abstract**

A washing machine and a control method thereof in which laundry is washed in a state of being directly heated by steam. The washing machine includes a microcomputer (61) for controlling the overall operation of the washing machine to wash laundry by using steam. The microcomputer controls operations of wetting (130) laundry with a small amount of water prior to generation of steam, uniformly spraying (160) detergent over the wet laundry, and injecting (190) steam onto the laundry. Accordingly, it is possible to achieve a reduction in the amount of water to be used and a reduction in wash time while preventing the laundry from being stained or damaged during the wash operation using steam.

## Description

Apparatus and methods consistent with the present invention relate to a washing machine and a control method thereof, and more particularly, but not exclusively to a washing machine and a control method thereof in which laundry is washed while being directly heated by steam.

There are conventional washing machines using wash water heated by a heater installed in a water tub. In such a washing machine, a detergent is put into a water tub during the supply of a predetermined amount of water. As the water tub is rotated in forward and reverse directions in a repeated fashion, the detergent is dissolved in the water supplied into the water tub. Thus, a wash process is carried out, using the detergent solution.

In order to effectively dissolve a detergent in water, and to transfer the resultant detergent solution over all portions of the laundry to be washed, it is necessary to use an increased amount of wash water. However, such an increase in the amount of wash water to be used causes an increase in the heating time of a heater adapted to heat the wash water. As a result, an increased consumption of electric energy and an increase in wash time occur.

In the above case, there is also a drawback in that the time taken for the wash water to reach a predetermined high temperature for an effective wash is prolonged.

The present invention has been made in view of the above mentioned and/or other problems, and an aim of embodiments of the invention is to provide a washing machine and a control method thereof in which laundry is washed in a state of being heated by steam, so that it is possible to reduce the wash time while using a reduced amount of water.

Another aim of embodiments of the invention is to provide a washing machine and a control method thereof which are capable of preventing laundry from being stained or damaged by hot steam as the steam comes into contact with the laundry to heat the laundry, while achieving an enhancement in washing.

In accordance with one aspect, the present invention provides a washing machine comprising: a rotatable drum for containing laundry; a drum driving unit for driving the rotatable drum; a steam generator for generating steam and supplying the steam into the rotatable drum; and a controller for controlling operations of injecting the steam supplied from the steam generator into the rotatable drum to heat the laundry into heated laundry, and washing the heated laundry.

The washing machine may further comprise a water supply unit for supplying water into the rotatable drum. In this case, the controller may drive the water supply unit to wet the laundry with water into wet laundry before the operation of washing the heated laundry.

The controller may control the drum driving unit to rotate the rotatable drum in forward and reverse directions in an alternating fashion while the laundry is wetted by the water.

The washing machine may further comprise a detergent dissolving unit for supplying a detergent solution into the rotatable drum. In this case, the controller may drive the detergent dissolving unit to spray the detergent solution over the wet laundry.

The controller may control the drum driving unit to rotate the rotatable drum at a predetermined speed before the detergent solution is sprayed.

The predetermined speed may be a speed sufficient to bring the laundry into constant contact with an inner peripheral surface of the rotatable drum while defining an empty space at a central interior of the rotatable drum.

The controller may control the detergent dissolving unit to spray the detergent solution when a rotating speed of the drum corresponds to the predetermined speed, and control the drum driving unit to reduce the rotating speed of the rotatable drum while the detergent solution is being sprayed.

The controller may control the drum driving unit to rotate the rotatable drum in forward and reverse directions in an alternating fashion so that the detergent solution sprayed over the laundry is transferred over all portions of the laundry.

The steam generator may comprise a heating tank for containing water, and a heater installed in the heating tank, and adapted to heat the water in the heating tank, thereby generating steam. The heater may be controlled by the controller.

The steam generator may further comprise a water level sensor for sensing a water level in the steam generator, and a water temperature sensor for sensing a water temperature in the steam generator. The water level sensor and water temperature sensor may provide, to the controller, information about the water level and water temperature sensed thereby.

The steam generator may further comprise a steam supply valve installed at an outlet of the heating tank. In this case, the controller may open the steam supply valve to supply the steam generated from the heating tank.

In accordance with another aspect, the present invention provides a control method for a washing machine comprising the steps of: when a setting of a user corresponds to a wash course for washing laundry using steam, supplying water into a rotatable drum as supplied water, and wetting laundry contained in the rotatable drum into wet laundry with the supplied water; spraying a detergent solution over the wet laundry; generating steam by a steam generator as generated steam; injecting the generated steam into the rotatable drum, thereby heating the laundry as heated laundry; and washing the heated laundry.

The rotatable drum may be rotated in forward and reverse directions in an alternating fashion while the laundry is wetted by the water.

The rotatable drum may be rotated at a predetermined speed to define an empty space at a central interior of the rotatable drum.

The detergent solution may be sprayed in the empty space defined in the rotatable drum, and the rotating speed of the rotatable drum is reduced below the predetermined speed while the detergent solution is being sprayed.

The rotatable drum may be rotated in forward and reverse directions in an alternating fashion for a predetermined time after completion of the spray of the detergent solution.

The predetermined time may span from a point of time when the rotatable drum is stopped to a point of time just before the generated steam is injected into the rotatable drum.

For a better understanding of the invention, and to show how embodiments of the same may be carried into effect, reference will now be made, by way of example, to the accompanying diagrammatic drawings in which:
FIG. 1 is a schematic perspective view illustrating the configuration of a washing machine according to an embodiment of the present invention;
FIG. 2 is a block diagram illustrating a control configuration applied to the washing machine according to the illustrated embodiment of the present invention;
FIG. 3 is a flow chart illustrating a method for controlling the washing machine in accordance with an embodiment of the present invention; and
FIGS. 4A and 4B are schematic views for explaining a wash cycle carried out by using steam in the washing machine in accordance with the control method, respectively.

Exemplary embodiments of the present invention will now be described in detail with reference to the annexed drawings.

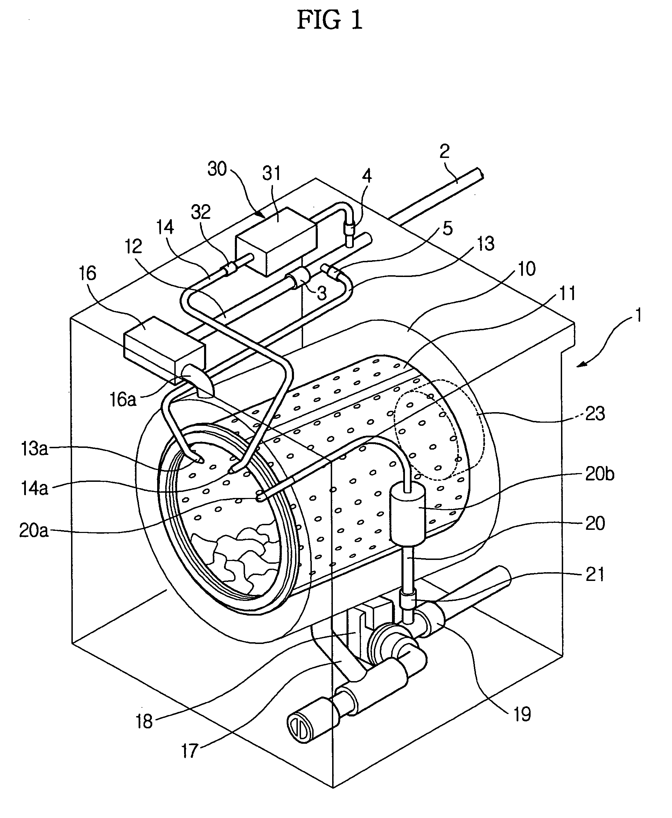

FIG. 1 is a schematic perspective view illustrating the configuration of a washing machine according to an embodiment of the present invention. This embodiment is applied to a drum type washing machine equipped with a steam generator.

As shown in FIG. 1, the drum type washing machine according to the illustrated embodiment of the present invention includes a first water supply pipe 12 for supplying water introduced from an external water service pipe 2 to a water tub 10, and a second water supply pipe 14 for supplying the water from the external water service pipe 2 to a heating tank 31 included in a steam generator 30. The drum type washing machine also includes a third water supply pipe 13 for supplying the water from the external water service pipe 2 to a rotatable drum 11.

Connected to the first water supply pipe 12 are a first water supply valve 3 and a detergent storage box 16. The detergent storage box 16 is adapted to store detergent powder therein. The water introduced into the first water supply pipe 12 is supplied to the water tub 10 after passing through the first water supply valve 3 and detergent storage box 16, so that it is introduced, along with the detergent, into the water tub 10 via an outlet pipe 16a.

A third water supply valve 5 is installed at the third water supply pipe 13 in order to selectively supply water into the rotatable drum 11. An injection nozzle 13a is mounted to an end of the third water supply pipe 13 exposed to the interior of the rotatable drum 11, in order to inject water into the rotatable drum 11.

A drain pipe 17 is arranged beneath the water tub 10 while being connected to a bottom of the water tub 10. A pump motor 18 is installed at the drain pipe 17 in order to pump the water and detergent contained in the water tub 10. A drain valve 19 is also installed at the drain pipe 17 downstream from the pump motor 18. A connecting pipe 20 is branched from the drain pipe 17 between the pump motor 18 and the drain valve 19. The connecting pipe 20 is connected to the drain pipe 17 at one end thereof while extending to an opening of the rotatable drum 11 at the other end thereof. The connecting pipe 10 has, at an intermediate portion thereof, a diameter larger than that of other portions thereof, to define a cylindrical detergent dissolving chamber 20b. An injection nozzle 20a is provided at the other end of the connecting pipe 20 in order to inject a detergent solution into the rotatable drum 11.

A check valve 21 for prevention of backflow is installed at the connecting pipe 20. When the drain valve 19 is opened under the condition in which the check valve 21 is shut off, the water pumped by the pump motor 18 is externally discharged without flowing backward to the connecting pipe 20. On the other hand, when the check valve 21 is opened in a closed state of the drain valve 19, the water pumped by the pump motor 18 is introduced into the connecting pipe 20, so that it flows upwardly.

Mounted at one side of the rotatable drum 11 is a drum motor 23 which is rotatable in forward and reverse directions. In accordance with operation of the drum motor 23, the rotatable drum 11 rotates in one direction or rotates in opposite directions in an alternating fashion.

The steam generator 30 is installed at the second water supply pipe 14 in order to heat water supplied to the second water supply pipe 14 through the second water supply valve 4. As described above, the steam generator 30 includes the heating tank 31. Provided in the heating tank 31 is a heater adapted to heat water contained in the heating tank 31, and thus, to generate steam, a water level sensor adapted to sense the level of water in the heating tank 31, and a water temperature sensor adapted to sense the temperature of water in the heating tank 31. A steam supply valve 32 is provided at an outlet of the steam generator 30.

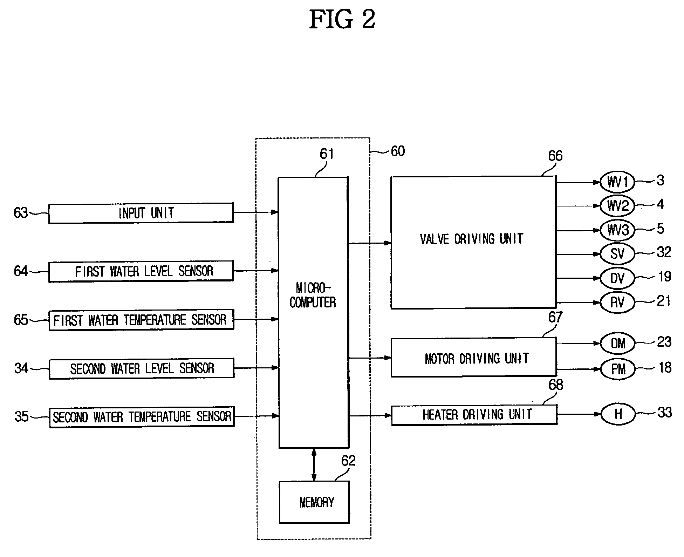

FIG. 2 is a block diagram illustrating a control configuration applied to the washing machine according to the illustrated embodiment of the present invention.

Referring to FIG. 2, the washing machine includes a controller 60 for controlling the overall operation of the washing machine. The controller 60 includes a microcomputer 61 and a memory 62. The memory 62 stores information about respective wash temperatures and respective wash times corresponding to various wash courses or programmes.

Connected to an input of the microcomputer 61 are an input unit 63 for inputting commands set by the user, a first water level sensor 64 and a first water temperature sensor 65 respectively installed at desired positions in the water tub 10, and adapted to sense the level and temperature of water contained in the water tub 10, and a second water level sensor 34 and a second water temperature sensor 35 respectively installed at desired positions in the heating tank 31, and adapted to sense the level and temperature of water contained in the heating tank 31.

The washing machine also includes a water supply valve driving unit 66 for driving the first through third water supply valves 3 to 5, steam supply valve 32, drain valve 19, and check valve 21, a motor driving unit 67 for driving the drum motor 23 and pump motor 18, and a heater driving unit 68 for driving the heater 33. These driving units 66 to 68 are connected to an output of the microcomputer 61.

The microcomputer 61 controls the overall operation of the washing machine required to wash laundry by using steam. That is, the microcomputer 61 controls operations of wetting laundry with a small amount of water prior to the generation of steam, spraying detergent over the wet laundry, and then injecting steam onto the laundry.

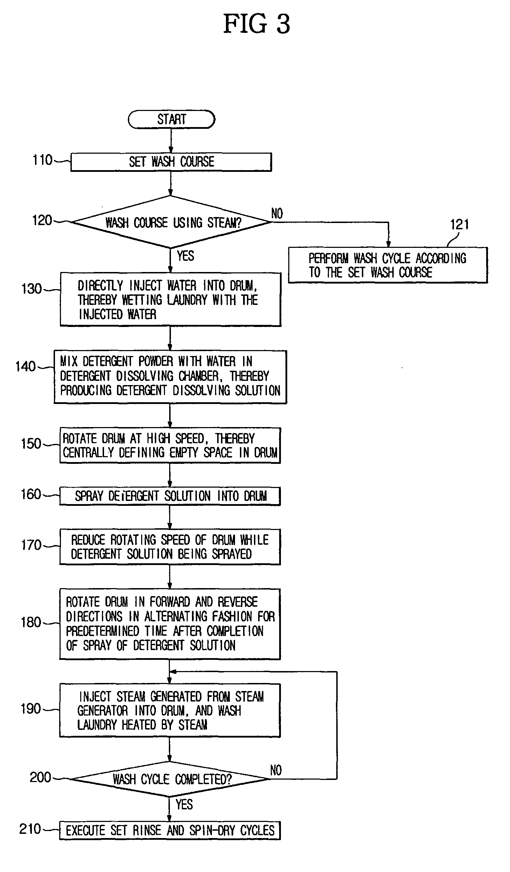

Now, a method for controlling the washing machine having the above described configuration in accordance with an embodiment of the present invention will be described in detail with reference to FIG. 3.

In accordance with the control method, a wash course or programme is first set by the user under the condition in which laundry has been put into the rotatable drum 11, and a door of the washing machine has then been closed (Step 110). The microcomputer 61 then determines whether or not the set wash course is a wash course for washing the laundry by using steam (Step 120). When it is determined at step 120 that the set wash course is not the wash course using steam, for example, when the set wash course is a wash course for washing the laundry by using cold water and detergent, a wash cycle according to the set wash course, that is, the wash course using cold water and detergent, is executed (Step 121).

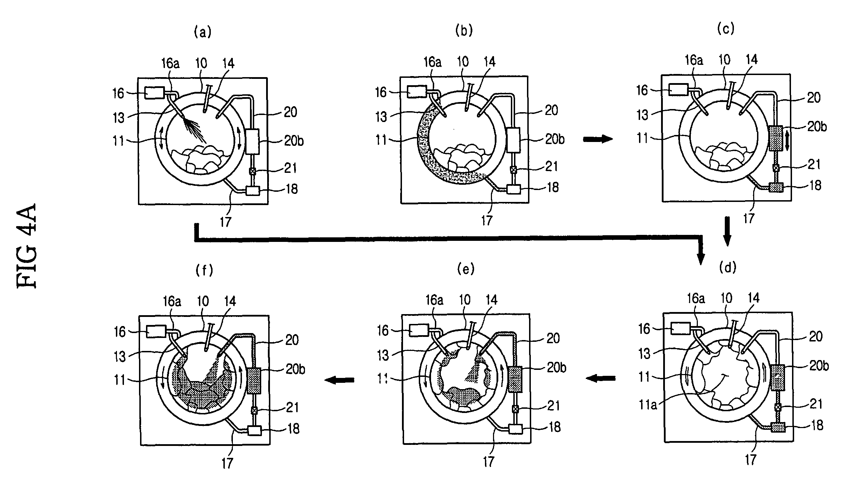

On the other hand, when the set wash course is the wash course using steam, the microcomputer 61 controls the valve driving unit 66 to open the third water supply valve 5. As a result, water from the external water service pipe 2 is supplied into the rotatable drum 11 through the injection nozzle 13a, so that the laundry is wetted by the supplied water. In order to uniformly wet the laundry with a small amount of water, the microcomputer 61 controls the motor driving unit 67 to rotate the rotatable drum 11 in forward and reverse directions in an alternating fashion ((a) of FIG. 4A) (Step 130).

The microcomputer 61 then controls the valve driving unit 66 to open the first water supply valve 3. As a result, detergent powder is put into the water tub 10, along with water introduced into the water tub 10 via the first water supply pipe 12. The microcomputer 61 also controls the motor driving unit 67 to drive the pump motor 18, thereby causing the water and detergent powder to be fed from the water tub 10 to the detergent dissolving chamber 20b. The fed water and detergent powder are mixed in the detergent dissolving chamber 20b, thereby producing a detergent solution ((b) and (c) of FIG. 4A) (Step 140). In order to achieve a reduction in wash time, steps 130 and 140 may be simultaneously executed.

After the execution of steps 130 and 140, the microcomputer 61 controls the motor driving unit 67 to rotate the rotatable drum 11 at high speed so that the laundry is in constant contact with an inner peripheral surface of the rotatable drum 11. As a result, an empty space 11a is defined at a central interior of the rotatable drum 11 ((d) of FIG. 4A) (Step 150).

Subsequently, the microcomputer 61 controls the motor driving unit 67 to drive the pump motor 18, thereby causing the detergent solution contained in the detergent dissolving chamber 20b to be injected into the rotatable drum 11 through the injection nozzle 20a. Thus, the detergent solution is sprayed over the laundry ((e) of FIG. 4A) (Step 160).

During the spray of the detergent solution over the laundry, the microcomputer controls the motor driving unit 67 to reduce the rotating speed of the rotatable drum 11. As the rotating speed of the rotatable drum 11 is reduced, the laundry, which is in constant contact with the inner peripheral surface of the rotatable drum 11, is tumbled. As a result, the detergent solution can be sprayed over the entire portion of the laundry ((f) of FIG. 4A) (Step 170).

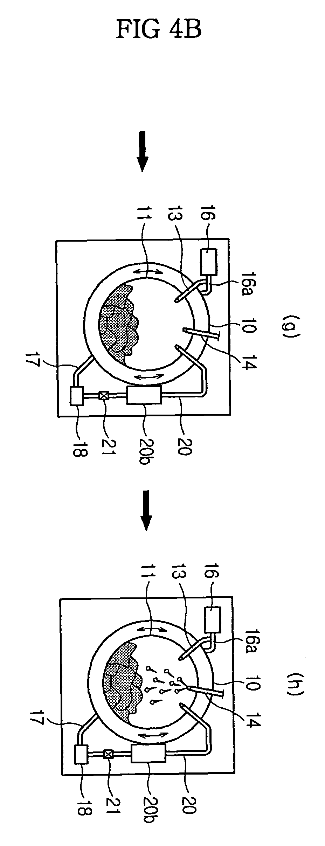

After the spray of the detergent solution, the microcomputer 61 controls the motor driving unit 67 to rotate the rotatable drum 11 in forward and reverse directions in an alternating fashion, in order to transfer the detergent solution over all portions of the laundry. This operation is continued for a predetermined time. In the illustrated embodiment of the present invention, the operation is continuously carried out for 5 minutes ((g) of FIG. 4B) (Step 180).

Thereafter, in order to store a desired amount of water in the heating tank 31, the microcomputer 61 controls the valve driving unit 66 to open the second water supply valve 4. Based on the water level of the heating tank 31 sensed by the second water level sensor 34, the microcomputer 61 subsequently closes the second supply valve 5. The microcomputer 61 also drives the heater driving unit 68 to drive the heater 33. In accordance with operation of the heater 33, the water stored in the heating tank 31 is heated. When steam is generated as the water in the heating tank 31 is heated, the microcomputer 61 controls the valve driving unit 66 to open the steam supply valve 32. As a result, the hot steam generated in the heating tank 31 is injected into the rotatable drum 11 through the injection nozzle 14a of the second water supply pipe 14. As the water and air present in the rotatable drum 11 are heated by the steam, the internal temperature of the rotatable drum 11 increases rapidly. At this time, the microcomputer 61 controls the motor driving unit 67 to rotate the rotatable drum 11 in forward and reverse directions in an alternating fashion. As a result, the laundry is washed in a state in which the steam injected into the rotatable drum 11 comes into contact with the laundry. In order to perform such a steam wash cycle at a predetermined wash temperature, the microcomputer 61 controls the steam injection and the stopping of the steam injection, based on the water temperature sensed by the first water temperature sensor 65 ((h) of FIG. 48) (Step 190).

During the wash cycle using steam, the microcomputer 61 periodically determines whether or not the wash cycle has been completed (Step 200). When it is determined that the wash cycle has not been completed, the microcomputer 61 returns its control operation to step 190.

When it is determined at step 200 that the wash cycle has been completed, the microcomputer 61 executes rinse and spin-dry cycles (Step 210).

As apparent from the above description, in accordance with embodiments of the present invention, steam is injected onto laundry, so as to directly heat the laundry. Accordingly, the time taken for the laundry to reach a desired wash temperature is reduced, so that it is possible to achieve a reduction in wash time and a reduction in the consumption of electric energy. In accordance with embodiments of the present invention, a wash cycle using steam is carried out for laundry under the condition in which the laundry has been wetted with a small amount of water, and then a detergent solution has been uniformly sprayed over the wet laundry. Accordingly, it is possible to achieve a reduction in the amount of water to be used and an enhancement in washing while preventing the laundry from being stained or damaged by hot steam when the steam comes into contact with the laundry.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A washing machine comprising:
a rotatable drum (11) for containing laundry;
a drum driving unit (23) for driving the rotatable drum;
a steam generator (30) for generating steam and supplying the steam into the rotatable drum; and
a controller (60) for controlling operations of injecting the steam supplied from the steam generator into the rotatable drum to heat the laundry into heated laundry, and washing the heated laundry.

2. The washing machine according to claim 1, further comprising:
a water supply unit (16a) for supplying water into the rotatable drum,
wherein the controller is operable to drive the water supply unit to wet the laundry with water into wet laundry before the operation of washing the heated laundry.

3. The washing machine according to claim 2, wherein the controller is operable to control the drum driving unit (23) to rotate the rotatable drum in forward and reverse directions in an alternating fashion while the laundry is wetted by the water.

4. The washing machine according to claim 2 or 3, further comprising:
a detergent dissolving unit (16) for supplying a detergent solution into the rotatable drum,
wherein the controller is operable to drive the detergent dissolving unit to spray the detergent solution over the wet laundry.

5. The washing machine according to claim 4, wherein the controller is operable to control the drum driving unit to rotate the rotatable drum at a predetermined speed before the detergent solution is sprayed.

6. The washing machine according to claim 5, wherein the predetermined speed is a speed sufficient to bring the laundry into constant contact with an inner peripheral surface of the rotatable drum while defining an empty space at a central interior of the rotatable drum.

7. The washing machine according to claim 5 or 6,
wherein the controller is operable to control the detergent dissolving unit to spray the detergent solution when a rotating speed of the drum corresponds to the predetermined speed, and to control the drum driving unit to reduce the rotating speed of the rotatable drum while the detergent solution is being sprayed.

8. The washing machine according to any of claims 4-7, wherein the controller is operable to control the drum driving unit to rotate the rotatable drum in forward and reverse directions in an alternating fashion to transfer the detergent solution sprayed over the laundry over substantially all portions of the laundry.

9. The washing machine according to any preceding claim, wherein the steam generator (30) comprises a heating tank (31) for containing water, and a heater installed in the heating tank adapted to heat the water in the heating tank, thereby generating steam, the heater being controlled by the controller (60).

10. The washing machine according to claim 9,
wherein the steam generator (30) further comprises a water level sensor (34) for sensing a water level in the steam generator, and a water temperature sensor (35) for sensing a water temperature in the steam generator, the water level sensor and water temperature sensor providing, to the controller, information about the water level and water temperature sensed thereby.

11. The washing machine according to claim 9 or 10, wherein the steam generator (30) further comprises a steam supply valve (32) installed at an outlet of the heating tank (31), and the controller is operable to open the steam supply valve to supply the steam generated from the heating tank.

12. A control method for a washing machine comprising the steps of:
when a setting of a user corresponds to a wash course for washing laundry using steam, supplying (130) water into a rotatable drum as supplied water, and wetting laundry contained in the rotatable drum into wet laundry with the supplied water;
spraying (160) a detergent solution over the wet laundry;
generating steam by a steam generator as generated steam;
injecting (190) the generated steam into the rotatable drum, thereby heating the laundry as heated laundry; and
washing the heated laundry.

13. The control method according to claim 12, wherein the rotatable drum is rotated in forward and reverse directions in an alternating fashion while the laundry is wetted by the supplied water.

14. The control method according to claim 12 or 13, wherein the rotatable drum is rotated at a predetermined speed to define an empty space at a central interior of the rotatable drum.

15. The control method according to claim 14, wherein the detergent solution is sprayed in the empty space defined in the rotatable drum, and a rotating speed of the rotatable drum is reduced (170) below the predetermined speed while the detergent solution is being sprayed in a spray of the detergent solution.

16. The control method according to claim 15, wherein the rotatable drum is rotated (180) in forward and reverse directions in an alternating fashion for a predetermined time after a completion of the spray of the detergent solution.

17. The control method according to claim 16, wherein the predetermined time spans from a point of time when the rotatable drum is stopped to a point of time just before the generated steam is injected into the rotatable drum.
